# EUROPÄISCHE PATENTSCHRIFT

(11) **EP 3 610 080 B1**
(45) Veröffentlichungstag und Bekanntmachung des Hinweises auf die Patenterteilung: **28.07.2021**
(21) Anmeldenummer: 18731000.8
(22) Anmeldetag: 04.06.2018
(51) Int. Cl.: E03B 7/07, F24D 17/00, B61D 35/00

(54) **FAHRZEUG MIT EINEM TRINKWASSERSYSTEM**
VEHICLE HAVING A DRINKING WATER SYSTEM
VÉHICULE ÉQUIPÉ D'UN SYSTÈME D'EAU POTABLE

(30) Priorität: 13.06.2017 DE 102017209952
(43) Veröffentlichungstag der Anmeldung: 19.02.2020
(73) Patentinhaber: Siemens Mobility GmbH, 81739 München (DE)
(72) Erfinder: GÄRTNER, Ralph, 41379 Brüggen (DE); SCHNEIDER, Christian, 46535 Dinslaken (DE)
(86) Internationale Anmeldenummer: PCT/EP2018/064571
(87) Internationale Veröffentlichungsnummer: WO 2018/228837

(56) Entgegenhaltungen:
- EP-A1- 1 652 822
- EP-A1- 2 305 530
- WO-A1-2011/095611
- DE-A1-102009 051 351

## Beschreibung

Die vorliegende Erfindung betrifft ein Fahrzeug mit einem Trinkwassersystem umfassend einen Trinkwasserbehälter, ein Temperaturmessgerät sowie eine Steuerungseinheit, welche mit dem Temperaturmessgerät verbunden ist und zum Einlesen der gemessenen Temperatur ausgebildet ist, wobei die Steuerungseinheit dazu ausgebildet ist, abhängig von der eingelesenen Temperatur eine Steuerungsfunktion auszuführen.

In Fahrzeugen, insbesondere in Schienenfahrzeugen, für Nah- und Fernverkehr werden Nasszellen wie beispielsweise WC- und Waschräume und Restaurants eingebaut. Darin sind vermehrt Wasserverbraucher wie zum Beispiel ein WC-Modul, ein Handwaschbecken, ein Spülbecken, eine Spülmaschine oder ähnliches vorgesehen, die jeweils Trinkwasser benötigen. Das Wasser wird in entsprechenden Trinkwasserbehältern beziehungsweise Trinkwassertanks gespeichert, die außen am Fahrzeug, auf dem Dach befestigt, in das Dach eingelassen, im Unterflurbereich oder im Innenraum eingebracht sind.

Ein gattungsgemäßes Fahrzeug gemäß dem Oberbegriff des unabhängigen Patentanspruchs 1 ist aus der EP 2 305 530 A1 bekannt. Auch die Druckschrift DE 10 2009 051351 A1 offenbart ein Fahrzeug mit einem Trinkwasserbehälter.

Die EP 1 652 822 A1 hingegen lehrt ein Warmwasserverteilsystem mit einem Warmwassertank und einem Temperatursensor im Warmwassertank zum Messen der Temperatur des im Warmwassertanks befindlichen Warmwassers sowie einer Dosiereinrichtung zur Abgabe von Entkeimungsmittel an das Warmwasser im Warmwassertank, sofern die Temperatur des Warmwassers im Warmwassertank über einen vorgegebenen Zeitraum außerhalb eines vorgegebenen Temperaturfensters liegt.

Zur Überwachung der hygienischen Qualität des Trinkwassers werden von den Bahnbetreibern regelmäßig Wasserproben aus entsprechenden Zapfstellen entnommen und in akkreditierten Laboren auf trinkwasserrelevante Keime untersucht. Bei Überschreiten von gesetzlich festgelegten Grenzwerten für Trinkwasser wird üblicherweise die Wasseranlage gereinigt und/oder entkeimt. Grenzwerte, die für Trinkwasser nicht überschritten werden sollen, existieren aktuell zum Beispiel für die sogenannte Koloniezahl bei 20°C, die Koloniezahl bei 36°C, für coliforme Bakterien, E. Coli oder Enterokokken. Für den Menschen besonders gefährliche Keime können sich dabei in Wasseranlagen ab 25°C bilden. Dies können zum Beispiel Legionellen sein.

Die Trinkwassersysteme sind dabei auf Einhaltung der Grenzwerte ausgelegt. Eine Sicherheit über die Trinkwasserqualität erfährt man nur bei der Beprobung, die typischerweise stichprobenartig in bestimmten Abständen durchgeführt werden. Im Falle einer positiven Befundung mit Überschreitung von gesetzlichen Grenzwerten wird üblicherweise im Depot versucht, durch Zugabe chemischer Substanzen wie beispielsweise von ClO₂ oder H₂O₂ in der Wasserversorgungsanlage diese Keime abzutöten.

Das Problem lässt sich aber auch durch betrieblich-technische Abläufe lösen, in dem die Verweildauer des Wassers im Trinkwasserbehälter möglichst kurz gehalten wird, sodass die Wachstumszeit kurz bleibt. Dabei muss das Trinkwasser demzufolge aber häufiger ausgewechselt werden.

Die Aufgabe besteht darin, ein Fahrzeug mit einem Trinkwassersystem bereitzustellen, welches eine dauerhafte Trinkwasserqualität bei geringem Wartungsaufwand gewährleistet.

Gelöst wird die Aufgabe durch die kennzeichnenden Merkmale des unabhängigen Patentanspruchs 1.

Erfindungsgemäß wird ein Fahrzeug mit einem Trinkwassersystem zur Verfügung gestellt, welches einen Trinkwasserbehälter umfasst. Ferner umfasst das Fahrzeug ein Temperaturmessgerät, welches zum Messen der Temperatur des im Trinkwasserbehälter befindlichen Trinkwassers ausgebildet ist. Ferner umfasst das Fahrzeug eine Steuerungseinheit, welche mit dem Temperaturmessgerät verbunden ist und zum Einlesen der gemessenen Temperatur des Trinkwassers ausgebildet ist. Die Steuerungseinheit ist ferner dazu ausgebildet, abhängig von der eingelesenen Temperatur des Trinkwassers eine Steuerungsfunktion auszuführen.

Das Fahrzeug hat den Vorteil, dass das Trinkwasser mittels der Steuerungseinheit aktiv überwacht und kontrolliert wird und auf Basis der eingelesenen Temperatur jederzeit eine entsprechende Maßnahme in Form einer Steuerungsfunktion ergriffen werden kann. So kann auf unerwünschte Temperaturentwicklungen unmittelbar reagiert werden. Auch können durch die eingeleiteten Steuerfunktionen automatische Maßnahmen ergriffen werden, wodurch der Wartungsaufwand reduziert und erleichtert wird. Ferner wird die Betriebssicherheit des Fahrzeugs erhöht sowie Reinigungen und Desinfektionen werden verringert. Das Temperaturmessgerät kann dabei rein beispielhaft ein Temperaturfühler sein, der innerhalb oder am Trinkwasserbehälter angebracht ist. Ein Trinkwasserbehälter ist in anderen Worten auch ein Trinkwassertank.

Darüber hinaus ist der Trinkwasserbehälter erfindungsgemäß mit einer ein Entkeimungsmittel umfassenden Dosiereinrichtung verbunden, wobei ferner die Steuerungseinheit mit der Dosiereinrichtung verbunden ist und die Steuerungseinheit dazu ausgebildet ist, abhängig von der eingelesenen Temperatur des Trinkwassers eine Abgabe von Entkeimungsmittel von der Dosiereinrichtung in den Trinkwasserbehälter zu bewirken. Somit kann vorteilhaft die Qualität des Trinkwassers gewahrt werden.

Die abzugebende Menge an Entkeimungsmittel hängt dabei auch von der gespeicherten Menge an Trinkwasser im Trinkwasserbehälter und somit vom Füllstand des jeweiligen Trinkwasserbehälters ab. Eine derartige Füllstandmessung ist in solchen Trinkwasserbehältern typischerweise verbaut.

Vorteilhaft kann die Steuerungseinheit dazu ausgebildet sein, bei Überschreiten eines ersten Temperaturschwellwerts eine Abgabe von Entkeimungsmittel von der Dosiereinrichtung in den Trinkwasserbehälter zu bewirken. Dadurch wird nur bei Bedarf Entkeimungsmittel hinzugegeben.

Der erste Temperaturschwellwert kann zwischen 20°C und 30°C liegen, bevorzugt zwischen 22,5°C und 27,5°C liegen, besonders bevorzugt zwischen 24,5°C und 25,5°C liegen. Dies sind typische Temperaturen, bei denen sich Keime wie zum Beispiel Legionellen ausbilden können.

Die Dosiereinrichtung kann als eine automatische Dosiereinrichtung ausgebildet sein. Eine automatische Dosiereinrichtung hat den Vorteil, dass weiterhin eine automatische Überwachung der Konzentration des Entkeimungsmittels im Trinkwasser erfolgt. Dadurch kann eine Überdosierung und eine damit verbundene Gefährdung für Nutzer vermieden werden.

Das Fahrzeug umfasst bevorzugt einen Schalter, welcher dazu ausgebildet ist, die Steuerungseinheit und/oder die Dosiereinrichtung abzuschalten. Somit kann ein Dauerbetrieb in beispielsweise unkritischen Jahreszeiten eingestellt werden, in denen nicht mit entsprechend hohen Temperaturen gerechnet wird. Dadurch kann vorteilhaft der Verbrauch von Entkeimungsmittel verringert werden.

Bevorzugt kann die Steuerungseinheit zum Erzeugen einer Warnfunktion bei Überschreiten eines zweiten Temperaturschwellwerts ausgebildet sein. Diese Warnfunktion kann beispielsweise auf einem Display der Steuerungseinheit selbst angezeigt werden, sodass Wartungs- oder Zugpersonal entsprechende Maßnahmen ergreifen können.

Bevorzugt ist die Steuerungseinheit zum Senden einer Warnfunktion an ein Empfangsgerät bei Überschreiten eines zweiten Temperaturschwellwerts ausgebildet. Das Empfangsgerät kann dazu im Fahrzeug selbst integriert sein. Dabei kann eine Warnfunktion beispielsweise auf einem zentralen Display im Fahrzeug dem Zugpersonal zur Information oder Handlung angezeigt werden. Das Empfangsgerät zum Empfang der Warnfunktion kann auch stationär in einem Fahrzeugführerbereich integriert sein. Parallel kann eine Warnfunktion auch beispielsweise via DFÜ, Datenfernübertragung, nach extern übermittelt werden, sodass entsprechende Maßnahmen wie beispielsweise das Befüllen des Trinkwasserbehälters zur Vorbereitung der Wartung geplant werden können. Das Empfangsgerät kann auch ein mobiles Empfangsgerät sein.

Der Trinkwasserbehälter kann ferner eine Öffnung zum manuellen Befüllen mit Entkeimungsmitteln umfassen. Somit kann beispielsweise das Wartungspersonal eine entsprechende manuelle Befüllung mit Entkeimungsmittel nach Anzeige oder Übermittlung der Warnfunktion ausführen. Vorteilhaft kann dadurch die Anzahl der Wiederholungen von Trinkwasserbeprobungen bei Überschreiten der Temperaturwerte reduziert werden.

Der Trinkwasserbehälter kann an eine Entleerungsleitung angeschlossen sein, wobei die Entleerungsleitung ein Entleerungsventil umfasst, wobei ferner die Steuerungseinheit mit dem Entleerungsventil zum Öffnen des Entleerungsventils bei Überschreiten eines dritten Temperaturschwellwerts verbunden ist. Somit kann auch das Trinkwasser entleert werden, wenn die Temperatur zu hoch ist. Beispielsweise kann die Temperatur dabei so hoch sein, dass eine zu hohe Menge an Entkeimungsmittel notwendig wäre. Dann kann das Trinkwasser entsprechend manuell durch Zugpersonal oder automatisch entleert werden.

Die Steuerungseinheit kann vorteilhaft mit einem Geschwindigkeitsmessgerät des Fahrzeugs zum Einlesen der Geschwindigkeit des Fahrzeugs verbunden sein, wobei das Öffnen des Entleerungsventils abhängig von der Geschwindigkeit des Fahrzeuges erfolgt. Dadurch kann vorteilhaft vermieden werden, dass die Entleerung bei voller Fahrt erfolgt.

Der Trinkwasserbehälter kann mit einer Kühleinheit zum Kühlen des Trinkwassers verbunden sein, wobei die Steuerungseinheit mit der Kühleinheit verbunden ist und dazu ausgebildet ist, ein Kühlen des Trinkwassers mittels der Kühleinheit abhängig von der eingelesenen Temperatur zu bewirken. Dadurch kann beispielsweise vorteilhaft die Temperatur entsprechend niedrig gehalten werden, sodass es gar nicht erst zu einem Keimbefall kommt. Eine Zugabe von Entkeimungsmittel kann dann zum Beispiel nicht mehr erforderlich sein.

Das Fahrzeug ist dabei bevorzugt ein motorbetriebenes Fahrzeug, besonders bevorzugt ein Schienenfahrzeug. Das Fahrzeug umfasst auch andere Verkehrsmittel, wie zum Beispiel Busse, Schiffe und Flugzeuge.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
Figur 1 ein Fahrzeug mit einem Trinkwassersystem nach einer ersten erfindungsgemäßen Ausführungsform,
Figur 2 ein Fahrzeug mit einem Trinkwassersystem nach einer zweiten nicht erfindungsgemäßen Ausführungsform, und
Figur 3 ein Fahrzeug mit einem Trinkwassersystem nach einer dritten nicht erfindungsgemäßen Ausführungsform.

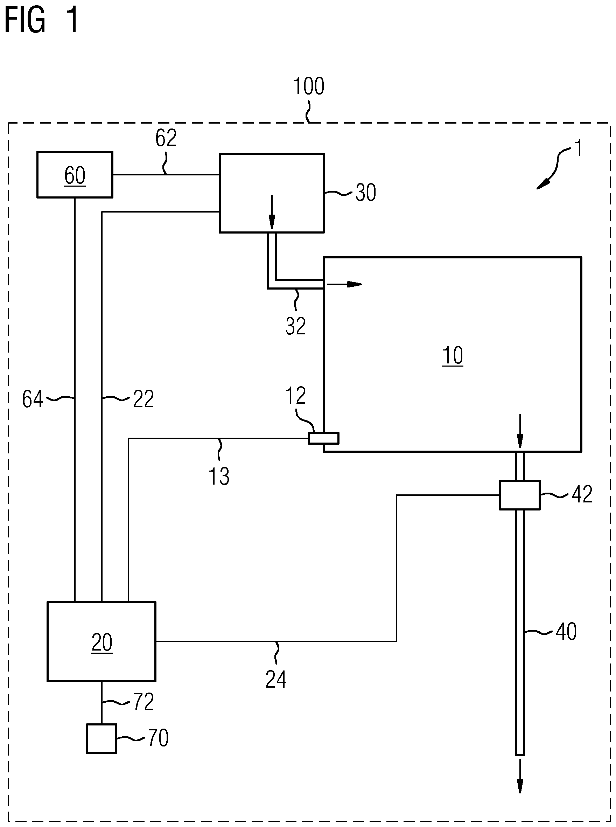

In der Figur 1 ist ein Fahrzeug 100 nach einer ersten Ausführungsform der Erfindung gezeigt. Das Fahrzeug 100 umfasst dabei ein Trinkwassersystem 1. Das Trinkwassersystem 1 umfasst dabei einen Trinkwasserbehälter 10. Ferner umfasst das Trinkwassersystem 1 ein Temperaturmessgerät 12. Dieses Temperaturmessgerät 12 ist dabei zum Messen der Temperatur des im Trinkwasserbehälter 10 befindlichen Trinkwassers ausgebildet. Das Temperaturmessgerät 12 kann beispielsweise ein Temperaturfühler sein, der im Trinkwasserbehälter 10 angebracht ist. Ferner umfasst das Trinkwassersystem 1 eine Steuerungseinheit 20, welche mit dem Temperaturmessgerät 12 verbunden ist und zum Einlesen der gemessenen Temperatur des Trinkwassers ausgebildet ist. Die Steuerungseinheit 20 ist weiterhin dazu ausgebildet, abhängig von der eingelesenen Temperatur des Trinkwassers eine Steuerungsfunktion auszuführen.

Das Einlesen der Temperatur beziehungsweise der Temperaturdaten kann dabei beispielsweise über eine erste Datenverbindung 13 erfolgen, die das Temperaturmessgerät 12 mit der Steuerungseinheit 20 verbindet. Die Erfindung umfasst aber grundsätzlich auch drahtlose Verbindungen.

Das permanente Einlesen der Temperatur durch die Steuerungseinheit 20 ermöglicht dabei ein aktives Überwachen der Temperatur des Trinkwassers zu jeder Zeit und ermöglicht es, sofort mittels einer Steuerungsfunktion der Steuerungseinheit 20 auf eine beispielsweise unerwünschte Temperaturänderung des Trinkwassers zu reagieren.

In dieser Ausführungsform umfasst das Trinkwassersystem 1 beispielhaft eine Dosiereinrichtung 30. Diese Dosiereinrichtung 30 umfasst ein Entkeimungsmittel, welches dazu geeignet ist, einer Bildung von Keimen im Trinkwasser entgegenzuwirken. Als Entkeimungsmittel kommen hierbei rein beispielhaft Chlor, zum Beispiel in Form von ClO₂, oder Wasserstoffperoxid H₂O₂ in Frage, wobei die Erfindung nicht darauf beschränkt ist.

Die Dosiereinrichtung 30 ist dabei mit dem Trinkwasserbehälter 10 verbunden, was hierbei durch eine Abgabeverbindung 32 dargestellt ist, sodass von der Dosiereinrichtung 30 die Abgabe von Entkeimungsmittel über diese Abgabeverbindung 32 in den Trinkwasserbehälter 10 ermöglicht ist. Dazu ist in dieser Ausführungsform die Steuerungseinheit 20 beispielhaft über eine erste Steuerverbindung 22 mit der Dosiereinrichtung 30 verbunden, sodass die Steuerungseinheit 20 eine Abgabe von Entkeimungsmittel von der Dosiereinrichtung 30 in den Trinkwassersbehälter 10 bewirken kann. Diese abzugebende Menge an Entkeimungsmittel hängt dabei auch von der gespeicherten Menge an Trinkwasser im Trinkwasserbehälter 10 und somit auch vom Füllstand des jeweiligen Trinkwasserbehälters 10 ab. Eine derartige Füllstandmessung ist in solchen Trinkwasserbehältern 10 typischerweise verbaut und kann von einer zentralen Nasszellensteuerung verarbeitet werden. In dieser Ausführungsform besteht die Steuerfunktion demnach in einer Abgabe von Entkeimungsmittel von der Dosiereinrichtung 30 in den Trinkwasserbehälter 10.

Die Steuerungseinheit 20 kann in dieser Ausführungsform rein beispielhaft so programmiert beziehungsweise ausgelegt sein, dass zu jedem Füllstand des Trinkwasserbehälters eine zugehörige passende Menge an Entkeimungsmittel in den Trinkwasserbehälter 10 befördert wird. In einem solchen Fall ist eine höhere Fördermenge von Entkeimungsmittel in den Trinkwasserbehälter 10 bei höherem Füllstand vorgesehen.

Die Dosiereinrichtung 30 ist bevorzugt direkt am Trinkwasserbehälter 10 angebracht, damit ein kurzer Förderweg und eine kurze Abgabeverbindung 32 ausreicht, um eine sofortige Abgabe von Entkeimungsmittel bei Bedarf zu ermöglichen. Die Abgabeverbindung 32 ist hierbei lediglich beispielhaft angezeigt, wobei in anderen Ausführungsformen der Erfindung beispielsweise nur ein entsprechender Auslass zum Trinkwasserbehälter 10 vorgesehen ist. Die Dosiereinrichtung 30 kann ferner einen Behälter umfassen, in dem das Entkeimungsmittel gespeichert werden kann. Auch kann die Dosiereinrichtung 30 eine Halterung umfassen, sodass ein entsprechender Behälter für Entkeimungsmittel, zum Beispiel ein Kanister, an dieser Halterung befestigt oder eingesetzt werden kann.

In einer besonderen Ausführungsform ist die Steuerungseinheit 20 dazu ausgebildet, erst bei Überschreiten eines ersten Temperaturschwellwerts eine Abgabe von Entkeimungsmittel von der Dosiereinrichtung 30 in den Trinkwasserbehälter 10 zu bewirken. Dem kann beispielsweise zugrunde liegen, dass bei Temperaturen des Trinkwassers unterhalb dieses ersten Temperaturschwellwerts kein wesentlicher Bedarf für die Zugabe von Entkeimungsmittel vorliegt und somit Entkeimungsmittel gespart werden kann.

Dieser erste Temperaturschwellwert kann beispielsweise zwischen 20°C und 30°C, bevorzugt zwischen 22,5°C und 27,5°C und besonders bevorzugt zwischen 24,5°C und 25,5°C liegen. Diese Temperaturen entsprechen Temperaturen, bei den sich typischerweise erste Keime beziehungsweise Keimkolonien wie zum Beispiel Legionellen ausbilden können, sodass eine Abgabe von Entkeimungsmittel in diesem Fall eine Keimbildung im Idealfall unterbindet oder zumindest die Konzentration in einen ungefährlichen Bereich senkt.

Die Dosiereinrichtung 30 kann bevorzugt als eine automatische Dosiereinrichtung ausgebildet sein. Bei solchen automatischen Dosiereinrichtungen 30 kann beispielhaft die Abgabe von Entkeimungsmittel von der Dosiereinrichtung 30 autonom reguliert werden. Insbesondere können vorteilhaft solche automatischen Dosiereinrichtungen die Konzentration des Entkeimungsmittels oder auch des pH-Wertes des im Trinkwasserbehälter 10 befindlichen Trinkwassers überwachen. Damit kann eine Überdosierung von Entkeimungsmitteln im Trinkwasser und damit eine Gefährdung des Benutzers vermieden werden.

In dieser rein beispielhaften Ausführungsform kann das Trinkwassersystem 1 des Fahrzeugs 100 weiterhin einen Schalter 60 umfassen. Dieser Schalter 60 ist hierbei beispielhaft dazu ausgebildet, die Steuerungseinheit 20 abzuschalten. Ferner kann der Schalter 60 auch dazu ausgebildet sein, die Dosiereinrichtung 30 abzuschalten. Alternativ kann über den Schalter 60 auch die Dosiereinrichtung 30 und die Steuerungseinheit 20 ausgeschaltet werden. Dazu ist der Schalter 60 in dieser Ausführungsform beispielhaft über eine erste Schaltverbindung 62 mit der Dosiereinrichtung 30 verbunden. Ferner ist in dieser Ausführungsform beispielhaft der Schalter 60 auch mit der Steuerungseinheit 20 mittels einer zweiten Schaltverbindung 64 verbunden. Ein Abschalten der Dosiereinrichtung 30 oder auch der Steuerungseinheit 20 kann insbesondere dann von Vorteil sein, wenn in bestimmten Jahreszeiten nicht mit kritischen Temperaturerhöhungen des Trinkwassers zu rechnen ist. Dann kann durch das Ausschalten beispielsweise der Verbrauch von Dosierungsmitteln und der damit verbundene Aufwand und Kosten für den Betreiber gemindert werden.

Der Trinkwasserbehälter 10 des Trinkwassersystems 1 ist in dieser bevorzugten Ausführungsform beispielhaft an eine Entleerungsleitung 40 angeschlossen. Die Entleerungsleitung 40 umfasst hierbei ein Entleerungsventil 42, mit dem ein Ausfluss von Trinkwasser aus dem Trinkwasserbehälter 10 kontrolliert beziehungsweise gesteuert werden kann. Hierzu kann, wie in dieser Ausführungsform gezeigt, die Steuerungseinheit 20 mit dem Entleerungsventil 42 über eine zweite Steuerverbindung 24 zur Steuerung des Entleerungsventils 42 verbunden sein. Falls die Temperatur des Trinkwassers einen dritten Temperaturschwellwert überschreitet, so kann die Steuerungseinheit 20 das Entleerungsventil 40 öffnen, sodass der Trinkwasserbehälter 10 entleert wird. In diesem Fall entspricht die Steuerfunktion der Steuerungseinheit 20 in einem Steuern des Entleerungsventils 42 beziehungsweise insbesondere einem Öffnen des Entleerungsventils 42.

In dieser Ausführungsform unterscheidet sich der dritte Temperaturschwellwert zum Öffnen des Entleerungsventils 42 von dem ersten Temperaturschwellwert zum Fördern von Entkeimungsmittel. Insbesondere ist bevorzugt vorgesehen, dass der dritte Temperaturschwellwert oberhalb des ersten Temperaturschwellwerts liegt. Beispielsweise kann dann in einer solchen Ausführungsform zunächst das Trinkwasser mittels der Dosiereinrichtung 30 entkeimt werden. Wenn jedoch die Temperatur weiterhin steigt und beispielsweise eine Überdosierung von Entkeimungsmitteln zum Erhalt der Trinkwasserqualität notwendig wäre, so kann mittels der Entleerungsfunktion bei Überschreiten dieses dritten Temperaturschwellwerts der Trinkwasserbehälter 10 entsprechend entleert werden.

In einer alternativen Ausführungsform weist das Trinkwassersystem 1 keine Dosiereinrichtung 30 auf und die Steuerungseinheit 20 ist dann lediglich zur Steuerung des Entleerungsventils 42 in Abhängigkeit der Temperatur des Trinkwassers ausgebildet. In einer solchen Ausführungsform muss dann der dritte Temperaturschwellwert nicht unterschiedlich sein von einem ersten Temperaturschwellwert, sondern kann in geeigneter Weise frei gewählt werden.

Alternativ kann beispielsweise die Steuerungseinheit 20 derart programmiert sein, dass die Steuerung des Entleerungsventils 42 nur beispielsweise bei einem Ausfall der automatischen Dosiereinrichtung 30 erfolgt.

Ferner kann das Trinkwassersystem 1 des Fahrzeugs 100 einen Geschwindigkeitsmesser 70 umfassen, welcher dazu ausgebildet ist, die Geschwindigkeit des Fahrzeugs 100 zu messen. Mittels einer zweiten Datenverbindung 72 kann dazu die Steuerungseinheit 20 die Geschwindigkeit des Fahrzeugs 100 permanent einlesen. Die Steuerungseinheit 20 kann somit vorteilhaft abhängig von der Geschwindigkeit des Fahrzeugs eine Entleerung mittels des Entleerungsventils 42 bewirken. Beispielsweise kann bei voller Fahrt des Fahrzeugs 100 das Entleerungsventil 42 trotz Überschreiten des dritten Temperaturschwellwerts geschlossen bleiben, damit nicht bei voller Fahrt das Trinkwasser entleert wird. Gerade im Schienenfahrzeugbereich kann somit eine Entleerung auf das Gleisbett bei voller Fahrt vermieden werden.

Nach einer erfolgten Entleerung des Trinkwasserbehälters kann dann eine zugehörige Verbraucherkomponente des Trinkwasserbehälters wie beispielsweise eine Nasszelle oder ein Restaurant deaktiviert werden, sodass eine Vermehrung gefährlicher Keime unterbunden wird.

Ferner kann eine Blockade der Zugabe von Entkeimungsmittel in den Trinkwasserbehälter 10 vorgesehen sein, welche verhindert, dass nochmals Entkeimungsmittel nach einer erstmaligen Zugabe erfolgt. Eine solche Blockade und Überwachung und/oder ein Anzeigen einer bereits getätigten Entkeimungsmittelzugabe kann beispielsweise in der Steuerungseinheit 20 programmtechnisch realisiert sein.

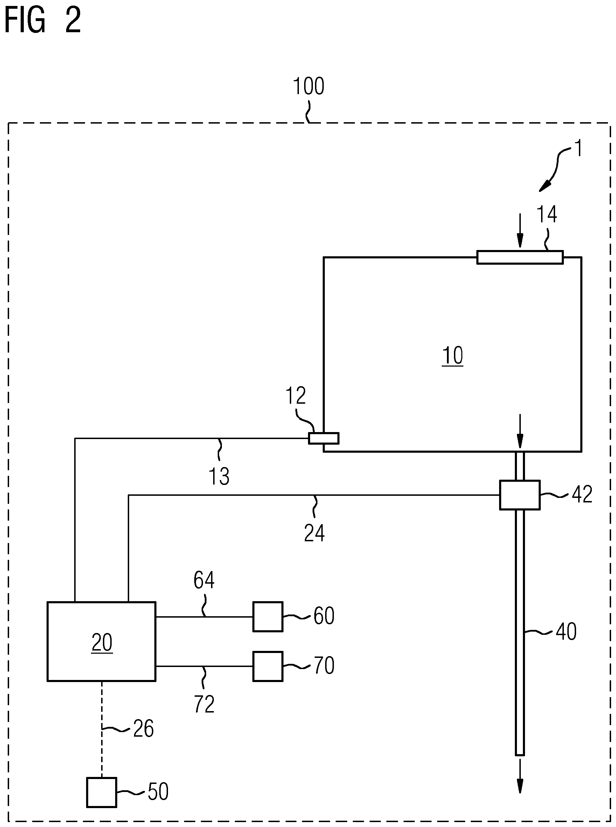

In der Figur 2 ist ein Fahrzeug 100 mit einem Trinkwassersystem 1 nach einer zweiten nicht erfindungsgemäßen Ausführungsform gezeigt. Das Trinkwassersystem 1 ist dabei grundsätzlich ähnlich wie in Figur 1 ausgebildet, sodass im Folgenden nur eine verkürzte Darstellung dieser Gemeinsamkeiten erfolgt, wobei hiermit ergänzend auf Figur 1 verwiesen wird.

Das Trinkwassersystem 1 umfasst dabei ebenfalls einen Trinkwasserbehälter 10. Ferner umfasst das Trinkwassersystem 1 ein Temperaturmessgerät 12. Dieses Temperaturmessgerät 12 ist dabei zum Messen der Temperatur des im Trinkwasserbehälter befindlichen Trinkwassers ausgebildet. Ferner umfasst das Trinkwassersystem 1 eine Steuerungseinheit 20, welche mit dem Temperaturmessgerät 12 verbunden ist und zum Einlesen der gemessenen Temperatur des Trinkwassers ausgebildet ist. Die Steuerungseinheit 20 ist weiterhin dazu ausgebildet, abhängig von der eingelesenen Temperatur des Trinkwassers eine Steuerungsfunktion auszuführen.

Das Einlesen der Temperatur beziehungsweise der Temperaturdaten kann dabei beispielsweise über eine erste Datenverbindung 13 erfolgen, die das Temperaturmessgerät 12 mit der Steuerungseinheit 20 verbindet. Die Erfindung umfasst aber grundsätzlich auch drahtlose Verbindungen.

Im Unterschied zu Figur 1 umfasst das Trinkwassersystem 1 in dieser Ausführungsform rein beispielhaft keine Dosiereinrichtung. Hingegen umfasst der Trinkwasserbehälter 10 in dieser Ausführungsform beispielhaft eine Öffnung 14 zum manuellen Befüllen des Trinkwasserbehälters 10 mit Entkeimungsmittel. Dazu ist die Steuerungseinheit 20 derart ausgebildet, dass diese bei Überschreiten eines zweiten Temperaturschwellwerts eine Warnfunktion erzeugt. Diese Warnfunktion kann beispielsweise auf einem Display der Steuerungseinheit 20 selbst angezeigt werden, sodass Wartungs- oder Zugpersonal entsprechende Maßnahmen wie beispielsweise das manuelle Befüllen des Trinkwasserbehälters 10 über die Öffnung 14 ergreifen können. In dieser Ausführungsform entspricht die Steuerfunktion demnach einem Anzeigen einer Warnfunktion.

Die Warnfunktion kann von der Steuerungseinheit 20 auch an ein Empfangsgerät 50 gesendet werden. Dazu ist beispielhaft eine dritte Steuerverbindung 26 zwischen Empfangsgerät 50 und Steuerungseinheit 20 vorgesehen, wobei diese auch drahtlos ausgebildet sein kann. In dieser Ausführungsform entspricht die Steuerfunktion demnach dem Senden einer Warnfunktion.

Der zweite Temperaturschwellwert kann beispielsweise ebenfalls zwischen 20°C und 30°C, bevorzugt zwischen 22,5°C und 27,5°C und besonders bevorzugt zwischen 24,5°C und 25,5°C liegen, da in dieser beispielhaften Ausführungsform keine Dosiereinrichtung vorgesehen ist. In anderen Ausführungsformen kann der zweite Temperaturschwellwert zum Erzeugen einer Warnfunktion oberhalb des ersten Temperaturschwellwerts liegen.

Bevorzugt ist das Empfangsgerät 50 dabei im Fahrzeug integriert, bevorzugt stationär integriert, wobei die Warnfunktion beispielsweise auf einem zentralen Display dem Zugpersonal zur Information oder Handlung angezeigt werden kann. Das Empfangsgerät 50 zum Empfang der Warnfunktion kann auch stationär im Fahrzeugführerbereich integriert sein. In anderen Ausführungsformen kann eine Warnfunktion beispielsweise via DFÜ, Datenfernübertragung, übermittelt werden, sodass entsprechende Maßnahmen wie beispielsweise das Befüllen des Trinkwasserbehälters zur Vorbereitung der Wartung geplant werden können. Das Empfangsgerät 50 kann in alternativen Ausführungsformen auch ein mobiles Empfangsgerät sein, welches beispielsweise vom Personal getragen wird. So kann vorteilhaft dem Personal bei Bedarf eine Warnung gesendet werden, sodass das Personal bei Überschreiten des zweiten Temperaturschwellwerts ein manuelles Befüllen des Trinkwasserbehälters 10 veranlassen kann.

Das Entkeimungsmittel kann hierzu rein beispielhaft in Form von Chlortabletten oder flüssigem Entkeimungsmittel vorliegen, wobei die Erfindung nicht darauf beschränkt ist.

Ferner kann rein beispielhaft auch in dieser Ausführungsform des Trinkwassersystems 1 zusätzlich eine Entleerungsleitung 40 umfassend ein Entleerungsventil 42 vorgesehen sein, wobei das Entleerungsventil 42 von der Steuerungseinheit 20 bei Überschreiten eines dritten Temperaturschwellwerts zur Entleerung des Trinkwasserbehälters 10 geöffnet werden kann.

In einer solchen Ausführungsform unterscheidet sich der zweite Temperaturschwellwert von dem dritten Temperaturschwellwert. Besonders vorteilhaft liegt der dritte Temperaturschwellwert zur Entleerung oberhalb von dem zweiten Temperaturschwellwert zur Warnung. In einem solchen Fall kann beispielsweise bei Ausbleiben einer manuellen Befüllung mit Entkeimungsmittel eine Entleerung erfolgen. Ferner kann beispielsweise die Temperatur auch derart ansteigen, dass eine unvorteilhaft hohe Menge an Entkeimungsmitteln notwendig wäre, sodass eine Entleerung als Sicherheit notwendig ist.

In einer weiteren Ausführungsform kann das Trinkwassersystem 1 des Fahrzeugs 100 auch sowohl eine Öffnung 14 zum manuellen Befüllen als auch eine nach Figur 1 beschriebene Dosiereinrichtung 30 umfassen. So kann beispielsweise einem Ausfall der Dosiereinrichtung 30 vorgebeugt werden, indem weiterhin eine manuelle Befüllung von Entkeimungsmittel in den Trinkwasserbehälter 10 möglich ist.

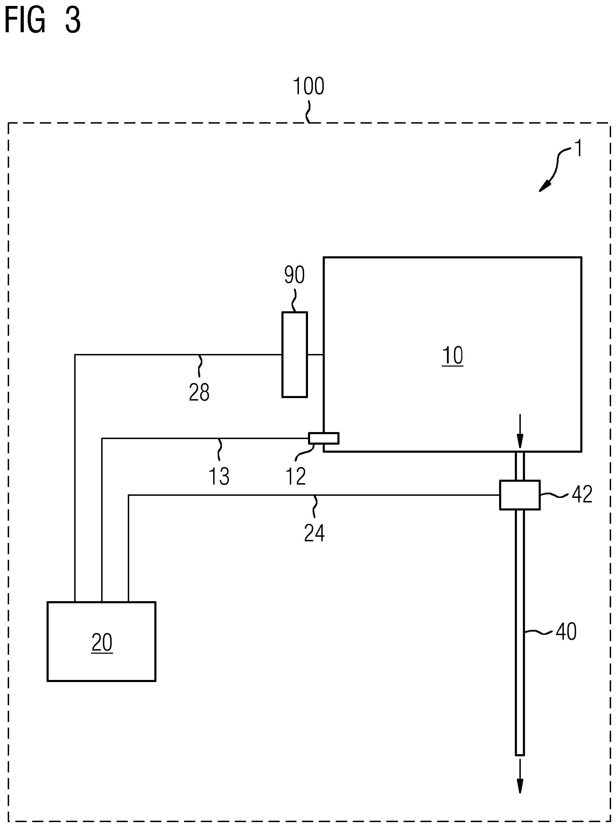

In der Figur 3 ist ein Fahrzeug 100 mit einem Trinkwassersystem 1 nach einer dritten nicht erfindungsgemäßen Ausführungsform gezeigt.

Das Trinkwassersystem 1 umfasst dabei ebenfalls einen Trinkwasserbehälter 10. Ferner umfasst das Trinkwassersystem 1 ein Temperaturmessgerät 12. Dieses Temperaturmessgerät 12 ist dabei zum Messen der Temperatur des im Trinkwasserbehälter 10 befindlichen Trinkwassers ausgebildet. Ferner umfasst das Trinkwassersystem 1 eine Steuerungseinheit 20, welche mit dem Temperaturmessgerät 12 verbunden ist und zum Einlesen der gemessenen Temperatur des Trinkwassers ausgebildet ist. Die Steuerungseinheit 20 ist weiterhin dazu ausgebildet, abhängig von der eingelesenen Temperatur des Trinkwassers eine Steuerungsfunktion auszuführen.

Das Einlesen der Temperatur beziehungsweise der Temperaturdaten kann dabei beispielsweise über eine erste Datenverbindung 13 erfolgen, die das Temperaturmessgerät 12 mit der Steuerungseinheit 20 verbindet. Die Erfindung umfasst aber grundsätzlich auch drahtlose Verbindungen.

In dieser Ausführungsführungsform kann das Trinkwassersystem 1 beispielhaft eine Kühleinheit 90 umfassen, welche dazu ausgebildet ist, das Trinkwasser im Trinkwasserbehälter 10 bei Bedarf zu kühlen. Dafür ist die Steuerungseinheit 20 beispielhaft über eine vierte Steuerverbindung 28 mit der Kühleinheit 90 verbunden, wobei die vierte Steuerverbindung 28 auch eine Drahtlosverbindung sein kann. Die Steuerungseinheit 20 ist ferner dazu ausgebildet, abhängig von der eingelesenen Temperatur des Trinkwassers die Kühleinheit 90.

Beispielsweise kann auch hier ein vierter Temperaturschwellwert vorgesehen sein, ab der die Steuerungseinheit 20 die Kühleinheit 90 betreibt und somit das Trinkwasser stets unterhalb dieses vierten Temperaturschwellwerts gehalten wird. Somit kann die Kühleinheit 90 zum aktiven Regeln der Temperatur eingesetzt werden. Dadurch kann vorteilhaft präventiv verhindert werden, dass die Temperatur des Trinkwassers in einen kritischen Temperaturbereich steigt, in dem sich Keime bilden können. Eine Dosiereinrichtung oder eine Öffnung zur manuellen Befüllung sind somit grundsätzlich in dieser Ausführungsform nicht notwendig. Der vierte Temperaturschwellwert kann beispielsweise ebenfalls zwischen 20°C und 30°C, bevorzugt zwischen 22,5°C und 27,5°C und besonders bevorzugt zwischen 24,5°C und 25,5°C liegen.

Ferner kann rein beispielhaft auch in dieser Ausführungsform des Trinkwassersystems 1 zusätzlich eine Entleerungsleitung 40 umfassend ein Entleerungsventil 42 vorgesehen ist, wobei das Entleerungsventil 42 von der Steuerungseinheit bei Überschreiten eines zweiten Temperaturschwellwerts zur Entleerung des Trinkwasserbehälters 10 geöffnet werden kann.

Bei vorliegen eines vierten Temperaturschwellwerts für die Kühlung unterscheidet sich in dieser Ausführungsform der zweite Temperaturschwellwert von dem vierten Temperaturschwellwert, wobei der zweite Temperaturschwellwert bevorzugt oberhalb des vierten Temperaturschwellwerts liegt. Zum Beispiel kann dann bei einem Ausfall der Kühleinheit 90 das Trinkwasser aus dem Trinkwasserbehälter 10 entsprechend geleert werden.

In anderen Ausführungsformen kann beispielsweise neben der Kühleinheit 90 zusätzlich eine Dosiereinrichtung nach Figur 1, bevorzugt eine automatische Dosiereinrichtung, oder eine Öffnung nach Figur 2 zum manuellen Befüllen oder auch weitere Kombinationen daraus vorliegen. Dabei ist es vorteilhaft, wenn sich die jeweiligen Temperaturschwellwerte voneinander unterscheiden. Beispielsweise kann der vierte Temperaturschwellwert zum Kühlen oberhalb eines ersten Temperaturschwellwerts zum Dosieren von Entkeimungsmittel liegen oder eines zweiten Temperaturschwellwerts zum Warnen liegen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Fahrzeug (100) mit einem Trinkwassersystem (1), umfassend:
- einen Trinkwasserbehälter (10);
- ein Temperaturmessgerät (12);
- eine Steuerungseinheit (20), welche mit dem Temperaturmessgerät (12) verbunden ist und zum Einlesen der gemessenen Temperatur ausgebildet ist;
- wobei die Steuerungseinheit (20) dazu ausgebildet ist, abhängig von der eingelesenen Temperatur eine Steuerungsfunktion auszuführen,
**dadurch gekennzeichnet, dass** das Temperaturmessgerät (12) zum Messen der Temperatur des im Trinkwasserbehälter (10) befindlichen Trinkwassers ausgebildet ist, wobei der Trinkwasserbehälter (10) mit einer ein Entkeimungsmittel umfassenden Dosiereinrichtung (30) verbunden ist, wobei ferner die Steuerungseinheit (20) mit der Dosiereinrichtung (30) verbunden ist und die Steuerungseinheit (20) dazu ausgebildet ist, abhängig von der eingelesenen Temperatur des Trinkwassers eine Abgabe von Entkeimungsmittel von der Dosiereinrichtung (30) in den Trinkwasserbehälter (10) zu bewirken, wobei die abzugebende Menge an Entkeimungsmittel vom Füllstand des im Trinkwasserbehälter (10) befindlichen Trinkwassers abhängt.

2. Fahrzeug (100) nach Anspruch 1, wobei die Steuerungseinheit (20) dazu ausgebildet ist, bei Überschreiten eines ersten Temperaturschwellwerts eine Abgabe von Entkeimungsmittel von der Dosiereinrichtung (30) in den Trinkwasserbehälter (10) zu bewirken.

3. Fahrzeug (100) nach Anspruch 2, wobei der erste Temperaturschwellwert zwischen 20°C und 30°C liegt, bevorzugt zwischen 22,5°C und 27,5°C liegt, besonders bevorzugt zwischen 24,5°C und 25,5°C liegt.

4. Fahrzeug (100) nach einem der Ansprüche 1 bis 3, wobei die Dosiereinrichtung (30) als eine automatische Dosiereinrichtung ausgebildet ist.

5. Fahrzeug (100) nach einem der vorherigen Ansprüche 1 bis 4, wobei das Trinkwassersystem (1) einen Schalter (60) umfasst, welcher dazu ausgebildet ist, die Steuerungseinheit (20) und/oder die Dosiereinrichtung (30) abzuschalten.

6. Fahrzeug (100) nach Anspruch 1, wobei die Steuerungseinheit (20) zum Erzeugen einer Warnfunktion bei Überschreiten eines zweiten Temperaturschwellwerts ausgebildet ist.

7. Fahrzeug (100) nach Anspruch 6, wobei die Steuerungseinheit (20) zum Senden einer Warnfunktion an ein Empfangsgerät (50) bei Überschreiten eines zweiten Temperaturschwellwerts ausgebildet ist.

8. Fahrzeug (100) nach einem der vorherigen Ansprüche 6 bis 7, wobei der Trinkwasserbehälter (10) eine Öffnung (14) zum manuellen Befüllen mit Entkeimungsmitteln umfasst.

9. Fahrzeug (100) nach einem der vorherigen Ansprüche, wobei der Trinkwasserbehälter (10) an eine Entleerungsleitung (40) angeschlossen ist, wobei die Entleerungsleitung (40) ein Entleerungsventil (42) umfasst, wobei ferner die Steuerungseinheit (20) mit dem Entleerungsventil (42) zum Öffnen des Entleerungsventils (42) bei Überschreiten eines dritten Temperaturschwellwerts verbunden ist.

10. Fahrzeug (100) nach Anspruch 9, wobei die Steuerungseinheit (20) mit einem Geschwindigkeitsmessgerät (70) des Fahrzeugs (100) zum Einlesen der Geschwindigkeit des Fahrzeugs (100) verbunden ist, wobei das Öffnen des Entleerungsventils (42) abhängig von der Geschwindigkeit des Fahrzeugs (100) erfolgt.

11. Fahrzeug (100) nach Anspruch 1, wobei der Trinkwasserbehälter (10) mit einer Kühleinheit (90) zum Kühlen des Trinkwassers verbunden ist, wobei die Steuerungseinheit (20) mit der Kühleinheit (90) verbunden ist und dazu ausgebildet ist, ein Kühlen des Trinkwassers mittels der Kühleinheit (90) abhängig von der eingelesenen Temperatur zu bewirken.

## Claims

1. Vehicle (100) having a drinking-water system (1) comprising:
- a drinking-water container (10);
- a temperature-measuring unit (12);
- a control unit (20) which is connected to the temperature-measuring unit (12) and is configured to read in the measured temperature;
- wherein the control unit (20) is configured to execute a control function in a manner dependent on the read-in temperature,
**characterized in that** the temperature-measuring unit (12) is configured to measure the temperature of the drinking water situated in the drinking-water container (10), wherein the drinking-water container (10) is connected to a dosing device (30) comprising a sterilizing agent, wherein furthermore the control unit (20) is connected to the dosing device (30) and the control unit (20) is configured to effect a discharge of sterilizing agent from the dosing device (30) into the drinking-water container (10) in a manner dependent on the read-in temperature of the drinking-water, wherein the quantity of sterilizing agent to be discharged depends on the fill level of the drinking water situated in the drinking-water container (10).

2. Vehicle (100) according to Claim 1, wherein the control unit (20) is configured to effect a discharge of sterilizing agent from the dosing device (30) into the drinking-water container (10) in the case of a first temperature threshold value being exceeded.

3. Vehicle (100) according to Claim 2, wherein the first temperature threshold value lies between 20°C and 30°C, preferably lies between 22.5°C and 27.5°C, particularly preferably lies between 24.5°C and 25.5°C.

4. Vehicle (100) according to one of Claims 1 to 3, wherein the dosing device (30) is in the form of an automatic dosing device.

5. Vehicle (100) according to one of the preceding Claims 1 to 4, wherein the drinking-water system (1) comprises a switch (60) which is configured to switch off the control unit (20) and/or the dosing device (30).

6. Vehicle (100) according to Claim 1, wherein the control unit (20) is configured to generate a warning function in the case of a second temperature threshold value being exceeded.

7. Vehicle (100) according to Claim 6, wherein the control unit (20) is configured to transmit a warning function to a receiving unit (50) in the case of a second temperature threshold value being exceeded.

8. Vehicle (100) according to either of the preceding Claims 6 and 7, wherein the drinking-water container (10) comprises an opening (14) for manual filling with sterilizing agents.

9. Vehicle (100) according to one of the preceding claims, wherein the drinking-water container (10) is connected to an emptying line (40), wherein the emptying line (40) comprises an emptying valve (42), wherein furthermore the control unit (20) is connected to the emptying valve (42) for the purpose of opening the emptying valve (42) in the case of a third temperature threshold value being exceeded.

10. Vehicle (100) according to Claim 9, wherein the control unit (20) is connected to a speed-measuring unit (70) of the vehicle (100) for the purpose of reading in the speed of the vehicle (100), wherein the opening of the emptying valve (42) is realized in a manner dependent on the speed of the vehicle (100).

11. Vehicle (100) according to Claim 1, wherein the drinking-water container (10) is connected to a cooling unit (90) for cooling the drinking water, wherein the control unit (20) is connected to the cooling unit (90) and is configured to effect cooling of the drinking water by means of the cooling unit (90) in a manner dependent on the read-in temperature.

## Revendications

1. Véhicule (100) ayant un système (1) d'eau potable, comprenant:
- un réservoir (10) d'eau potable;
- un appareil (12) de mesure de la température;
- une unité (20) de commande, qui est reliée à l'appareil (12) de mesure de la température et qui est constituée pour lire la température mesurée;
dans lequel l'unité (20) de commande est constituée pour exécuter une fonction de commande en fonction de la température qui est lue,
**caractérisé en ce que** l'appareil (12) de mesure de la température est constitué pour la mesure de la température de l'eau potable se trouvant dans le réservoir (10) d'eau potable, dans lequel le réservoir (10) d'eau potable est relié à un dispositif (30) de dosage comprenant un agent de stérilisation, dans lequel en outre l'unité (20) de commande est reliée au dispositif (30) de dosage et l'unité (20) de commande est constituée pour provoquer, en fonction de la température, qui est lue, de l'eau potable, une distribution d'agent de stérilisation par le dispositif (30) de dosage dans le récipient (10) d'eau potable, dans lequel la quantité distribuée d'agent de stérilisation dépend du niveau de l'eau potable se trouvant dans le récipient (10) d'eau potable.

2. Véhicule (100) suivant la revendication 1, dans lequel l'unité (20) de commande est constituée pour provoquer, lorsqu'une première valeur de seuil de température est dépassée, une distribution d'agent de stérilisation par le dispositif (30) de dosage dans le récipient (10) d'eau potable.

3. Véhicule (100) suivant la revendication 2, dans lequel la première valeur de seuil de température est comprise entre 20°C et 30°C, de préférence entre 22,5°C et 27,5°C, d'une manière particulièrement préférée entre 24,5°C et 25,5°C.

4. Véhicule (100) suivant l'une des revendications 1 à 3, dans lequel le dispositif (30) de dosage est constitué sous la forme d'un dispositif de dosage automatique.

5. Véhicule (100) suivant l'une des revendications 1 à 4 précédentes, dans lequel le système (1) d'eau potable comprend un interrupteur (60), qui est constitué pour mettre hors circuit l'unité (20) de commande et/ou le dispositif (30) de dosage.

6. Véhicule (100) suivant la revendication 1, dans lequel l'unité (20) de commande est constituée pour la production d'une fonction d'alerte si une deuxième valeur de seuil de température est dépassée.

7. Véhicule (100) suivant la revendication 6, dans lequel le dispositif (20) de commande est constitué pour l'envoi d'une fonction d'alerte à un appareil (50) de réception si une deuxième valeur de seuil de température est dépassée.

8. Véhicule (100) suivant l'une des revendications 6 à 7 précédentes, dans lequel le réservoir (10) d'eau potable comprend une ouverture (14) de remplissage manuel d'agent de stérilisation.

9. Véhicule (100) suivant l'une des revendications précédentes, dans lequel le réservoir (10) d'eau potable est raccordé à un conduit (40) de vidange, dans lequel le conduit (40) de vidange comprend un robinet (42) de vidange, dans lequel en outre l'unité (20) de commande est reliée au robinet (42) de vidange pour l'ouverture du robinet (42) de vidange si une troisième valeur de seuil de température est dépassée.

10. Véhicule (100) suivant la revendication 9, dans lequel l'unité (20) de commande est reliée à un appareil (70) de mesure de la vitesse du véhicule (100) pour lire la vitesse du véhicule (100), dans lequel l'ouverture du robinet (42) de vidange s'effectue en fonction de la vitesse du véhicule (100).

11. Véhicule (100) suivant la revendication 1, dans lequel le réservoir (10) d'eau potable est relié à une unité (90) de refroidissement pour refroidir l'eau potable, dans lequel l'unité (20) de commande est reliée à l'unité (90) de refroidissement et est constituée pour provoquer un refroidissement de l'eau potable à l'aide de l'unité (90) de refroidissement en fonction de la température qui est lue.
